# FASCICULE DE BREVET EUROPEEN

(11) **EP 1 645 492 B1**
(45) Date de publication et mention de la délivrance du brevet: **25.08.2010**
(21) Numéro de dépôt: 05292090.7
(22) Date de dépôt: 07.10.2005
(51) Int. Cl.: B62D 25/16

(54) **Dispositif de fixation d'un protecteur de roue sur la structure d'un véhicule automobile, avec moyens de filtration des vibrations**
Befestigungsvorrichung eines Radschutzes an die Struktur eines Kraftfahrzeugs, mit Mitteln zur Hemmung von Schwingungen
Fastening assembly of a wheel protector to the structure of a motor vehicle, with means for suppressing vibrations

(30) Priorité: 11.10.2004 FR 0410690
(43) Date de publication de la demande: 12.04.2006
(73) Titulaire: MÖLLERTECH SAS, 91370 Verrières le Buisson (FR)
(72) Inventeur: Motto, Alain, 36330 Le Poinconnet (FR)
(74) Mandataire: Thinat, Michel

(56) Documents cités:
- EP-A- 0 528 410
- DE-A1- 10 059 695
- PATENT ABSTRACTS OF JAPAN vol. 008, no. 073 (M-287), 5 avril 1984 (1984-04-05) & JP 58 218477 A (NISSAN JIDOSHA KK), 19 décembre 1983 (1983-12-19)

## Description

L'invention concerne en général l'isolation acoustique des véhicules automobiles.

Plus précisément, l'invention concerne un dispositif de fixation d'un protecteur de roue sur la structure d'un véhicule automobile, ce protecteur étant une pièce mince enveloppant la roue d'un côté supérieur et s'étendant entre la roue et ladite structure du véhicule, à distance de cette structure, de façon à intercepter les éléments solides projetés par la roue.

EP 0 528 410 A1 décrit un tel dispositif conformément au préambule de la revendication 1.

Les véhicules automobiles dont les protecteurs sont fixés à l'aide de dispositifs de fixation selon l'art antérieur présentent un niveau sonore élevé à l'intérieur de l'habitacle, ce qui est gênant pour les passagers.

Dans ce contexte, la présente invention a pour but de pallier le défaut mentionné ci-dessus, et de proposer un dispositif de fixation qui permette de réduire le bruit perçu par les passagers du véhicule.

A cette fin, le dispositif de l'invention, par ailleurs conforme à la définition générique qu'en donne le préambule ci-dessus, est essentiellement caractérisé en ce qu'il comprend au moins un organe de fixation du protecteur sur la structure et une première cale en matériau atténuant les vibrations, interposée entre le protecteur et la structure au niveau de l'organe de fixation.

Le dispositif de l'invention peut également comprendre une ou plusieurs des caractéristiques ci-dessous.
- L'organe de fixation peut comprendre une tête disposée d'un côté du protecteur tourné vers la roue, et une tige rigidement liée de la tête, la tige étant engagée dans un orifice du protecteur et rigidement fixée sur la structure.
- Une seconde cale en matériau atténuant les vibrations peut être interposée entre le protecteur et la tête
- Les première et seconde cales peuvent présenter des trous traversés par la tige de l'organe de fixation.
- Les sections de passage des trous peuvent être relativement plus faibles que celle de l'orifice ménagé dans le protecteur, de telle sorte que la tige n'est pas au contact des bords de l'orifice.
- La tige peut présenter une extrémité libre opposée à la tête engagée à force dans un perçage de la structure.
- Les première et/ou seconde cales peuvent être constituées d'une mousse d'un matériau élastique.
- Le protecteur peut être une pièce moulée en une matière comprenant un thermoplastique tel que le polypropylène, ou être constitué de moquette.

D'autres caractéristiques et avantages de l'invention ressortiront clairement de la description qui en est faite ci-dessous, à titre indicatif et nullement limitatif, en référence aux figures annexées, parmi lesquelles :
- la figure 1 est une vue en perspective montrant l'implantation typique des protecteurs de roue sur un véhicule,
- la figure 2 est une vue en coupe transversale de la structure du véhicule de la figure 1, du protecteur et du dispositif de fixation de l'invention, et
- la figure 3 est une vue en perspective du protecteur des figures 1 et 2.

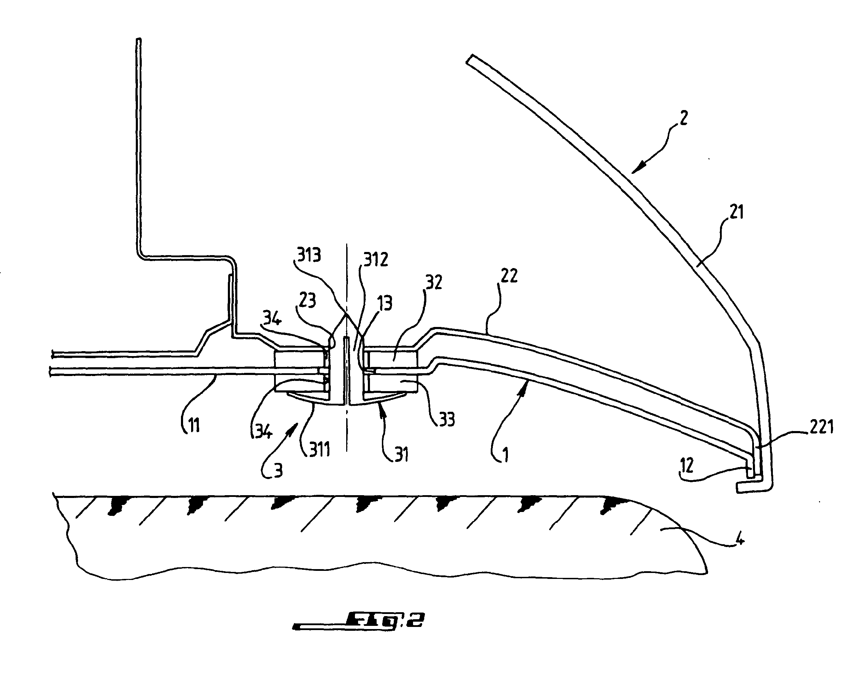

Le dispositif de fixation représenté sur la figure 2 a pour fonction de fixer des protecteurs 1 de roue sur la structure 2 d'un véhicule automobile.

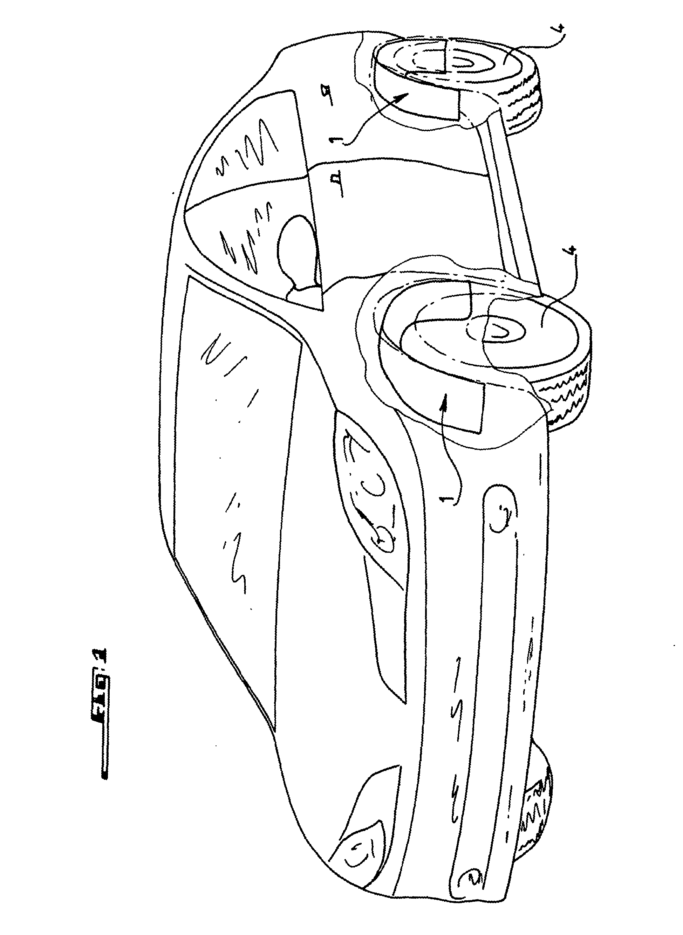

La figure 1 montre que le véhicule automobile compte un protecteur 1 pour chaque roue 4, ce protecteur 1 étant une pièce mince enveloppant la roue d'un côté supérieur et s'étendant entre la roue 4 et la structure 2 du véhicule, à distance de cette structure, de façon à intercepter les éléments solides projetés par la roue 4.

Ces éléments solides sont, en fonction du sol sur lequel roule le véhicule, des gravillons, des agrégats de terre, des gouttelettes d'eau, ou tout élément solide mobile susceptible de se trouver sur le sol.

La roue du véhicule en passant sur ces éléments solides peut les projeter. Ces éléments peuvent également se coincer dans les rainures en creux ménagées sur la bande de roulement du pneu, être entraînés en rotation par la roue, et être projetés par la force centrifuge après une fraction de tour de roue, en direction de la structure du véhicule.

En l'absence de protecteur de roue, ces éléments solides impacteraient la structure du véhicule autour de la roue, ce qui aurait pour conséquence de faire un bruit important et ce qui pourrait conduire à terme à une dégradation de cette structure.

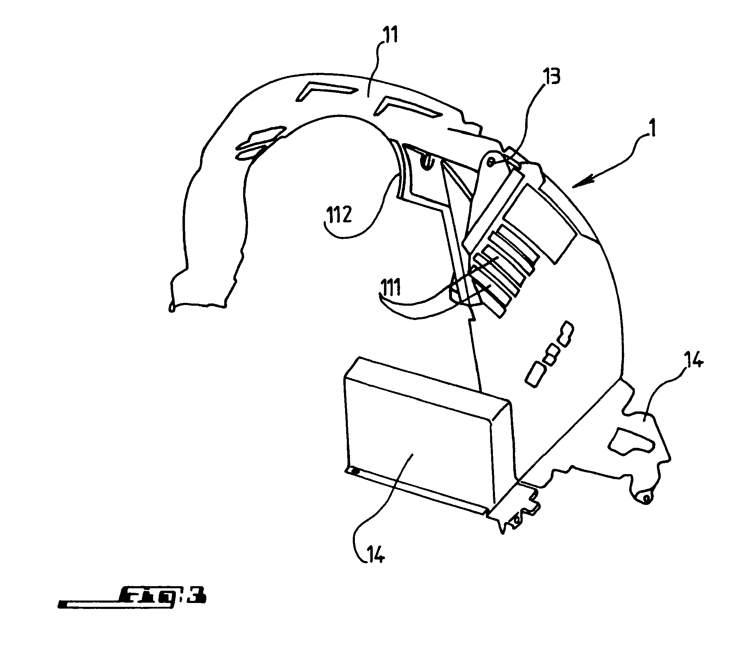

On voit sur la figure 3 que le protecteur 1 présente la forme générale d'un demi-cylindre d'axe transversal par rapport au véhicule, et présente une partie radiale 11 s'étendant sensiblement parallèlement à la bande de roulement du pneumatique du véhicule, le long de la moitié supérieure de la circonférence de ce pneumatique. Cette partie radiale 11 peut comporter des nervures de rigidification telles que 111 et une échancrure 112 d'un côté intérieur permettant le passage du ressort de suspension.

Le protecteur 1 peut également comprendre un rebord latéral 12 prolongeant la partie radiale 11 d'un côté extérieur, et s'étendant radialement vers la roue dans un plan vertical (voir figure 2).

Le protecteur 1 comprend encore diverses parties protubérantes 14 permettant typiquement d'obturer des espaces creux comme le pare-chocs, de façon éviter des écoulements d'air dans ces volumes, ces écoulements pouvant créer des bruits et des vibrations.

La structure 2 du véhicule à laquelle est fixé le protecteur 1 comprend l'aile du véhicule 21 et une tôlerie 22 enveloppant radialement la roue 4 le long des deux tiers de sa circonférence (figure 2).

La tôlerie 22 est rigidement fixée d'un côté latéral extérieur 221 sur l'aile 21, par exemple par soudage, et d'un côté intérieur et/ou supérieur sur une autre pièce rigide du véhicule, non représentée.

On voit sur la figure 2 que le rebord extérieur 12 du protecteur 1 est rigidement fixé contre le côté latéral extérieur 221 de la tôlerie 22.

Cette tôlerie 22 est constituée d'une tôle ou de plusieurs tôles mutuellement assemblées par soudage, rivetage ou tout autre moyen adéquat.

Le protecteur 1 s'étend parallèlement à la tôlerie 22, à proximité de celle-ci, et est interposé entre la tôlerie 22 et la bande de roulement du pneumatique, de sorte qu'il peut intercepter les éléments solides qui se détachent du pneumatique sous l'effet de la force centrifuge.

Sur les véhicules d'entrée de gamme, le protecteur 1 est une pièce moulée en un thermoplastique tel que le polypropylène. Sur les véhicules de milieu de gamme, le protecteur 1 comprend un cadre et une pièce de moquette tendue à l'intérieur du cadre. Enfin, sur les véhicules haut de gamme, le protecteur 1 est une pièce moulée en un matériau contenant un thermoplastique tel que le polypropylène mélangé à un matériau élastique tel que l'EPDM.

Selon l'invention, le dispositif de fixation 3 comprend au moins un organe de fixation 31 du protecteur 1 sur la structure 2 et une première cale 32 en matériau atténuant les vibrations, interposée entre le protecteur 1 et la structure 2 au niveau de l'organe de fixation 31.

On voit sur la figure 2 que cette cale 32 est disposée dans l'interstice séparant la partie radiale 11 du protecteur 1 de la tôlerie 22, et présente une face inférieure pressée au contact du protecteur 1 et une face supérieure opposée à la face inférieure pressée contre la tôlerie 22.

Par ailleurs, l'organe de fixation 31 comprend une tête 311 disposée d'un côté inférieur du protecteur 1 tourné vers la roue 4, et une tige 312 rigidement liée à la tête 311, la tige 312 traversant la partie radiale 11 du protecteur 1 par un orifice 13 du protecteur 1 ménagé à cet effet, et étant rigidement fixée sur la tôlerie 22 de la structure 2 par une extrémité libre 313 opposée à la tête 311.

De façon à améliorer encore l'isolation vibratoire du protecteur 1 par rapport à la structure 2, le dispositif de fixation 3 comprend une seconde cale 33 en matériau atténuant les vibrations interposée entre le protecteur 1 et la tête 311 de l'organe de fixation 31.

Cette seconde cale 33 présente une face supérieure pressée au contact du protecteur 1 et une face inférieure opposée à la face supérieure pressée contre la tête 311.

La seconde cale 33 présente, considérée en section perpendiculairement à la direction verticale, une forme de préférence sensiblement identique à celle de la première cale 32, et est disposée immédiatement sous cette première cale 32, seul l'épaisseur du protecteur séparant les deux cales.

On voit encore sur la figure 2 que les première et seconde cales 32 et 33 présentent des trous 34 verticaux mutuellement alignés, et disposés de part et d'autre de l'orifice 13, dans le prolongement de celui-ci.

La tige 312 de l'organe de fixation 31 traverse successivement le trou 34 de la seconde cale 33, l'orifice 13 et le trou 34 de la première cale 32.

Les sections de passage des trous 34 sont relativement plus faibles que celle de l'orifice 13 ménagé dans le protecteur, de telle sorte que la tige 312 n'est pas au contact des bords de l'orifice 13 et que les vibrations ne peuvent pas se propager du protecteur 1 à la tige 312.

Dans une première variante de réalisation, l'organe de fixation 31 est un sapin en matière plastique, pourvu d'un tête 311 plate, et dont la tige 312 porte une pluralité de picots répartis le long de ladite tige.

Ces picots sont des languettes flexibles venues de moulage avec le sapin, s'étendant chacune suivant une direction légèrement inclinée par rapport à la tige 312, chacune liée à la tige 312 par une première extrémité opposée à la tête 311 et présentant une seconde extrémité libre du côté de la tête 311, la languette s'écartant de la tige 312 quand on la suit de la première extrémité jusqu'à la seconde.

L'extrémité libre 313 de la tige 312 est engagée à force dans un perçage 23 ménagé dans la tôlerie 22, les picots constituant une pluralité de crans de retenue de la tige 312 dans le perçage 23.

Ces picots, du fait de leur orientation, autorisent l'engagement de la tige 312 dans le perçage en se rabattant contre la tige 312 pendant le passage à travers le perçage 23 et en s'écartant de la tige une fois le perçage passé. Ils n'autorisent pas le désengagement car ils viennent en butée contre le bord du perçage 23.

L'existence de plusieurs picots répartis le long de la tige 312 permet d'ajuster la force d'appui de la tête 311 sur la seconde cale 33.

Dans une seconde variante de réalisation, la tige 312 de l'organe de fixation peut être un goujon présentant une extrémité soudée sur la tôlerie 22 et une extrémité opposée filetée, la tête 311 étant un écrou vissé sur l'extrémité filetée du goujon.

Les première et/ou seconde cales 32 et 33 sont constituées d'un matériau apte à amortir les vibrations, typiquement d'un matériau élastique naturel, comme le caoutchouc, ou artificiel. De préférence, on choisira une mousse d'un matériau élastique.

On notera que le dispositif de fixation comprend typiquement pour chaque protecteur 1 plusieurs organes de fixation 31 et un jeux de cales 32/33 pour chaque organe de fixation 31. Ces organes de fixation sont répartis en plusieurs endroits du protecteur, au-dessus de la roue et sur les côtés de celle-ci, pour assurer une fixation solide du protecteur 1 sur la structure 2.

Enfin, on peut avantageusement disposer une cale de filtration supplémentaire entre le rebord extérieur 12 du protecteur et le côté latéral 221 de la structure 2, de façon à éliminer tout contact direct entre la structure et le protecteur et améliorer encore la filtration des vibrations.

On comprend donc bien que le dispositif de fixation décrit ci-dessus présente de multiples avantages.

Les vibrations générées par les éléments solides projetés par la roue contre le protecteur 1 sont filtrées et absorbées en grande partie par les cales 32/33 avant d'être transmises à la structure du véhicule 2.

Une première cale interposée entre le protecteur et la tôlerie permet d'éviter la transmission de vibrations directement du protecteur à la tôlerie.

L'efficacité de cette filtration est encore accrue du fait que l'organe de fixation n'est jamais en contact direct avec le protecteur, les vibrations ne pouvant donc pas passer du protecteur à la tôlerie à travers l'organe de fixation. A cet effet, on utilise une seconde cale isolant la tête de l'organe du protecteur, et on choisit les sections des trous de passage de la tige 312 de façon à éviter tout contact direct de cette tige avec les bords de l'orifice du protecteur traversé par la tige.

On obtient ainsi une grande qualité de filtration des vibrations, ce qui se traduit par une diminution considérable du bruit et des vibrations perçues par les passagers du véhicule.

Ce résultat est atteint par des moyens particulièrement simples et économiques, dont le montage est facile et rapide.

Le matériau utilisé, la forme et l'épaisseur des cales sont choisis en fonction du cahier des charges imposé par le constructeur pour le véhicule, et en particulier du niveau de bruit perçu par les passagers visé par le constructeur.

Le principe de fixation décrit ci-dessus s'adapte aux types de protecteurs les plus courants.

## Revendications

1. Dispositif de fixation d'un protecteur sur une tôlerie (22) d'un véhicule automobile enveloppant radialement la roue, comprenant au moins un organe de fixation (31), le protecteur (1) s'étendant entre la roue (4) et ladite tôlerie et étant une pièce mince susceptible de propager des vibrations sous l'effet des éléments solides projetés par la roue, **caractérisé en ce qu'**il comprend une première et une seconde cale (33) constituées toutes deux en un matériau atténuant les vibrations, la première cale (32) étant interposée entre le protecteur (1) et la tôlerie (22) au niveau de l'organe de fixation (31) et la seconde cale (33) entre le protecteur (1) et l'organe de fixation (31), l'organe de fixation étant pourvu d'une tête (311) disposée d'un côté du protecteur (1) tourné vers la roue et d'une tige (312) rigidement liée de la tête (311), la tige étant engagée dans un orifice (13) du protecteur et rigidement fixée sur la tôlerie (2), la seconde cale (33) étant interposée entre le protecteur (1) et la tête (311).

2. Dispositif selon la revendication 1, **caractérisé en ce que** les première et seconde cales (32, 33) présentent des trous (34) traversés par la tige (312) de l'organe de fixation (31).

3. Dispositif selon la revendication 2, **caractérisé en ce que** les sections de passage des trous (34) sont relativement plus faibles que celle de l'orifice (13) ménagé dans le protecteur (1), de telle sorte que la tige (312) n'est pas au contact des bords de l'orifice (13).

4. Dispositif selon l'une quelconque des revendications précédentes, **caractérisé en ce que** les première et/ou seconde cales (32, 33) sont constituées d'une mousse d'un matériau élastique.

5. Dispositif selon l'une quelconque des revendications 1 à 4, **caractérisé en ce que** la tige (312) présente une extrémité libre (313) opposée à la tête (311) engagée à une force dans un perçage (23) de la structure (2).

6. Dispositif selon l'une quelconque des revendications précédentes, **caractérisé en ce que** la protecteur (1) est une pièce moulée en une matière comprenant un thermoplastique tel que le polypropylène, ou est constitué de moquette.

7. Agencement de protection d'une tôlerie (22) d'un véhicule automobile, enveloppant radialement la roue du véhicule, comprenant la tôlerie (22), un protecteur (1) enveloppant la roue (4) d'un côté supérieur et s'étendant entre la roue (4) et ladite tôlerie (22) et étant une pièce mince susceptible de propager des vibrations sous l'effet des éléments solides projetés par la roue (4), et un dispositif de fixation du protecteur (1) sur la tôlerie (22), pourvu d'un organe de fixation, **caractérisé en ce que** le dispositif de fixation du protecteur (1) sur la tôlerie (22) est le dispositif de fixation de l'une quelconque des revendications 1 à 6.

8. Agencement selon la revendication 7, **caractérisé en ce qu'**une cale de filtration supplémentaire est disposée entre le rebord extérieur (12) du protecteur (1) et le côté latéral (221) de la tôlerie (22), de façon à encore améliorer la filtration des vibrations.

## Claims

1. A device for fastening a protector to the body (22) of a motor vehicle radially surrounding the wheel, comprising at least one fastening member (31), the protector (1) extending between the wheel (4) and said body and being a thin part capable of propagating vibrations under the effect of solid elements projected by the wheel, **characterized in that** it comprises a first and a second shim (33) both consisting of a vibration reducing material, with the first shim (32) being interposed between the protector (1) and the body (22) at the fastening member (1), and the second shim (33) between the protector (1) and the fastening member (31), the fastening member being provided with a head (311) arranged on one side of the protector (1) turned towards the wheel and a shank (312) rigidly linked to the head (311), the shank being engaged into an orifice (13) of the protector and rigidly fastened to the body (2), the second shim (33) being interposed between the protector (1) and the head (311).

2. The device according to claim 1, **characterized in that** the first and second shims (32, 33) have holes (34) through which passes the shank (312) of the fastening member (31).

3. The device according to claim 2, **characterized in that** the opening areas of the holes (34) are relatively smaller than that of the orifice (13) made in the protector (1), so that the shank (312) does not touch the edges of the orifice (13).

4. The device according to any of the preceding claims, **characterized in that** the first and/or second shims (32, 33) consist of some foam of an elastic material.

5. The device according to any of claims 1 to 4, **characterized in that** the shank (312) has a free end (313) opposite the head (311) forcibly engaged into a bore (23) of the body (2).

6. The device according to any of the preceding claims, **characterized in that** the protector (1) is a part molded from a material comprising a thermoplastic such as polypropylene, or consists of carpeting.

7. An arrangement for protecting a body (22) of a motor vehicle, radially surrounding the wheel of the vehicle, comprising the body (22), a protector (1) surrounding the wheel (4) on an upper side and extending between the wheel (4) and said body (22) and being a thin part capable of propagating vibrations under the effect of the solid elements projected by the wheel (4), and a device for fastening the protector (1) to the body (22), provided with a fastening member, **characterized in that** the device for fastening the protector (1) to the body (22) is the fastening device according to any of claims 1 to 6.

8. The arrangement according to claim 7, **characterized in that** an additional filtering shim is arranged between the outer edge (12) of the protector (1) and the lateral side (221) of the body (22), so as to further improve filtering of vibrations.

## Patentansprüche

1. Vorrichtung zum Befestigen eines Schutzelements an einer Karosserie (22) eines Kraftfahrzeugs, welches das Rad radial umgibt, umfassend mindestens ein Befestigungsorgan (31), wobei sich das Schutzelement (1) zwischen dem Rad (4) und der Karosserie erstreckt und ein dünnes Teil ist, das in der Lage ist, Vibrationen unter der Einwirkung fester Elemente, die von dem Rad aufgeworfen werden, zu verbreiten, **dadurch gekennzeichnet, dass** sie ein erstes und ein zweites Füllstück (33), die beide aus einem vibrationsdämpfenden Material bestehen, umfasst, wobei das erste Füllstück (32) zwischen das Schutzelement (1) und die Karosserie (22) an dem Befestigungsorgan (1) und das zweite Füllstück (33) zwischen dem Schutzelement (1) und dem Befestigungsorgan (31) eingeschoben wird, wobei das Befestigungsorgan mit einem Kopf (311), der auf einer Seite des Schutzelements (1) angeordnet ist, die zum Rad hin gewendet ist, und mit einem Schaft (312), der fest mit dem Kopf (311) verbunden ist, versehen ist, wobei der Schaft in eine Öffnung (13) des Schutzelements in Eingriff gebracht wird und fest an der Karosserie (2) befestigt ist, wobei das zweite Füllstück (33) zwischen dem Schutzelement (1) und dem Kopf (311) eingeschoben ist.

2. Vorrichtung nach Anspruch 1, **dadurch gekennzeichnet, dass** die ersten und zweiten Füllstücke (32, 33) Löcher (34) aufweisen, durch welche der Schaft (312) des Befestigungsorgans (31) geht.

3. Vorrichtung nach Anspruch 2, **dadurch gekennzeichnet, dass** die Durchgangsquerschnitte der Löcher (34) relativ geringer sind als derjenige der Öffnung (13), die in dem Schutzelement (1) eingerichtet ist, so dass der Schaft (312) nicht die Ränder der Öffnung (13) berührt.

4. Vorrichtung nach einem der vorhergehenden Ansprüche, **dadurch gekennzeichnet, dass** die ersten und/oder zweiten Füllstücke (32, 33) aus einem Schaumstoff eines elastischen Materials bestehen.

5. Vorrichtung nach einem der Ansprüche 1 bis 4, **dadurch gekennzeichnet, dass** der Schaft (312) ein freies Ende (313) gegenüber dem Kopf (311) aufweist, das mit einer gewissen Kraft in eine Bohrung (23) der Karosserie (2) in Eingriff gebracht wird.

6. Vorrichtung nach einem der vorhergehenden Ansprüche, **dadurch gekennzeichnet, dass** das Schutzelement (1) ein Pressteil aus einem Material ist, das ein Thermoplast umfasst, wie etwa Polypropylen, oder aus Teppichboden besteht.

7. Anordnung zum Schutz einer Karosserie (22) eines Kraftfahrzeugs, die das Rad des Fahrzeugs radial umgibt, umfassend die Karosserie (22), ein Schutzelement (1), welches das Rad (4) oberseitig umgibt und sich zwischen dem Rad (4) und der Karosserie (22) erstreckt und ein dünnes Teil ist, das in der Lage ist, Vibrationen unter der Einwirkung der festen Elemente, die von dem Rad (4) aufgeworfen werden, zu verbreiten, und eine Vorrichtung zum Befestigen des Schutzelements (1) an der Karosserie (22), die mit einem Befestigungsorgan versehen ist, **dadurch gekennzeichnet, dass** die Vorrichtung zum Befestigen des Schutzelements (1) an der Karosserie (22) die Befestigungsvorrichtung nach einem der Ansprüche 1 bis 6 ist.

8. Anordnung nach Anspruch 7, **dadurch gekennzeichnet, dass** ein zusätzliches Filterfüllstück zwischen dem Außenrand (12) des Schutzelements (1) und der Seitenfläche (221) der Karosserie (22) angeordnet ist, um das Filtern von Vibrationen weiter zu verbessern.
